# EUROPEAN PATENT SPECIFICATION

(11) **EP 4 290 409 B1**
(45) Date of publication and mention of the grant of the patent: **10.09.2025**
(21) Application number: 22925433.9
(22) Date of filing: 14.02.2022
(51) Int. Cl.: G06K 19/06, G06Q 10/087, G06Q 30/018

(54) **DIGITAL LABEL**
DIGITALES ETIKETT
ÉTIQUETTE NUMÉRIQUE

(43) Date of publication of application: 13.12.2023
(73) Proprietor: Jiangsu Yongde Intelligent Label Technology Co., Ltd, Gaoyou, Jiangsu 225600 (CN)
(72) Inventor: ZHU, Yulong, Gaoyou, Jiangsu 225600 (CN)
(74) Representative: IK-IP LTD
(86) International application number: PCT/CN2022/076148
(87) International publication number: WO 2023/151071

(56) References cited:
- CN-A- 106 600 181
- CN-U- 202 351 930
- CN-U- 207 458 109
- US-A1- 2005 068 312
- US-A1- 2017 046 707

## Description

### FIELD

The present disclosure generally relates to a label, in particular to a digital label system.

### BACKGROUND

With the development of the digital economy, the demand for digital transformation is increasingly prominent. A label needs to be used for any product, and in the existing label applications it is necessary to express more and more information on the label. CN207458109U disclosed an RFID and QR code based product safety traceability label, which includes RFID electronic labels and QR code labels, and where the information in the labels records the distribution process of the product from production by the manufacturer to use by the consumer. US20170046707A1 disclosed system and method for mobile device self-checkout for retail transactions with loss protection, which relates to mobile device retail self-checkout with incorporated theft detection system and methods thereof. The traditional label, whether it is a paper label or a washed label, cannot meet the demand, and a digital label under the existing digital transformation is needed.

### SUMMARY

The objectives of some embodiments of the present invention are to provide a digital label that is convenient to read and write, may be used as the only entrance for representation of information, and at the same time can have the capability of high-density coding, a large information capacity, a strong fault tolerance, with an error correction function, where a damage can also be identified and has high confidentiality, low cost, easy to make, durable and other characteristics.

Some embodiments of the present invention are provided with a digital label system, comprising: a digital label comprising: a unique code (1); a first storage element (11), wherein the first storage element (11) is configured to store commodity information; a unique code platform (2), wherein the unique code platform (2) is configured to link the commodity information with the unique code (1); wherein the unique code platform (2) comprises a storage medium (3), and the storage medium (3) is configured to store the commodity information; a front-end client terminal (4), wherein the front-end client terminal (4) comprises a second storage element (41) and is configured to connect to the unique code platform (2) via a network; wherein the front-end client terminal (4) is configured to: obtain the commodity information in the storage medium (3) in the unique code platform (2) through a network by clicking the unique code (1) through an input box or a mouse; or store the commodity information stored on the first storage element (11) to the second storage element (41) and read the commodity information from the second storage element (41) by reading the unique code (1); a back-end management module (5); display the commodity information; wherein the back-end management module (5) is configured to assign a value to the unique code (1) or modify the commodity information of the unique code (1) or to assign a second code after the digital label is recycled.

Further, a first storage element is provided on the digital label, and the commodity information is written to the first storage element by a coding device.

Further, the unique code corresponds to the commodity information stored on the storage medium.

Further, the front-end client terminal is also provided with a second storage element, which is configured to store the commodity information stored on the first storage element to the second storage element, and the front-end client terminal is configured to read the commodity information within the second storage element by reading the unique code.

Further, the front-end client terminal is connected to at least one of the unique code platforms, and the unique code platform is connected to at least one of the back-end management modules.

Further, the unique code further comprises:
a one-dimensional barcode or two-dimensional code; the digital label is configured to set the one-dimensional barcode or two-dimensional code;
the one-dimensional barcode or two-dimensional code is set as an integral with a first storage element set on the digital label.

Further, the first storage element is an RFID radio frequency element, and the first storage element writes commodity information in the first storage element by a coding device.

Further, the unique code is scanned by a scanning gun or a scanning camera, to read the link of the unique code, and to connect to the unique code platform through the network, and to read the commodity information stored on the memory medium in the unique code platform;
or

The first storage element is scanned by a RFID scan reader, and the commodity information stored on the memory medium in the unique code platform is directly read.

Further, the unique code can be clicked through an input box or a mouse of the front-end client terminal, and the commodity information on the memory medium within the unique code platform can be obtained through the network.

Further, the digital label is attached to a product to be identified by affixing or sewing.

According to some embodiments of the present application, a digital label includes a unique code and a unique code platform, where the unique code platform links the commodity information with the unique code, and the memory medium is provided on the unique code platform, and the commodity information is stored in the memory medium; and the front-end client terminal is configured to connect with the unique code platform through the network; the front-end client terminal obtains the commodity information stored on the storage medium through a unique code; and the back-end management module can be set, where the back-end management module is configured to assign a value to the unique code or modify the unique code commodity information. The above digital label can be convenient for reading and writing, can be used as the only entrance for the representation of information, and at the same time a digital label can have the capability of high-density coding, a large information capacity, a strong fault tolerance, with an error correction function, where a damage can also be identified and has high confidentiality, low cost, easy to make, durable and other characteristics. It can solve the technical problem in the existing technologies that more and more information to be represented is needed on a label, and a traditional label, whether it is a paper label or a washable label, can no longer meet the need.

### BRIEF DESCRIPTION OF THE DRAWINGS

One or more embodiments are illustrative by means of figures in the corresponding drawings, and these exemplary descriptions do not constitute any limitation on these embodiments, where elements with a same reference sign in the drawings are represented as similar elements, and unless otherwise stated the figures in the drawings do not constitute any limitation in proportion.
Figure 1 is a schematic diagram of a digital label according to some embodiments of the present invention;
Figure 2 is a schematic diagram of the connection of a digital label according to some embodiments of the present invention.

### DETAILED DESCRIPTION

To allow the objectives, technical solutions and advantages of the present invention to be clearer, some embodiments of the present invention will be described in details in conjunction with the accompanying drawings. However, those of ordinary skilled in the art will appreciate that in various embodiments of the present invention, many technical details are presented to the reader in order to better understand the present application. However, even without these technical details and various changes and modifications to the following embodiments, the technical solution claimed by each claim of the present application can be implemented.

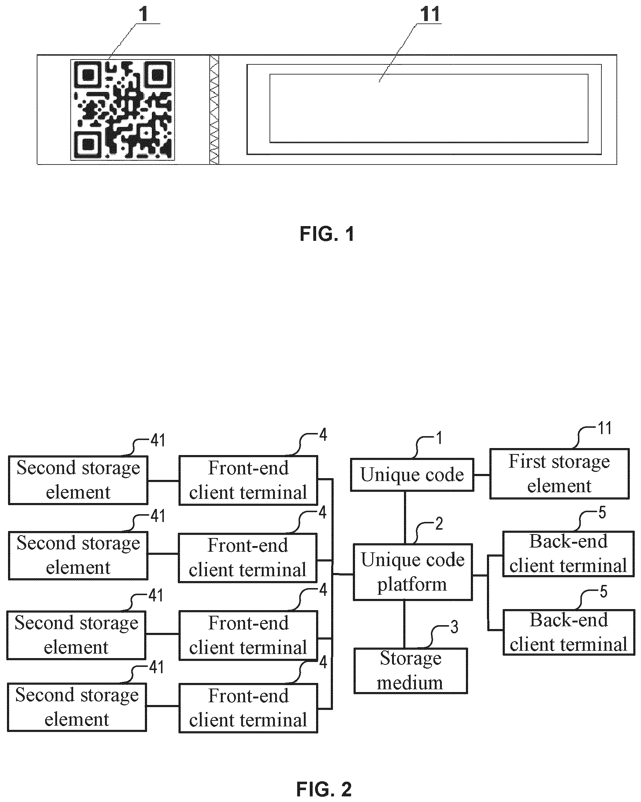

A first example of some embodiments of the present invention relates to a digital label, as shown in Figures 1 and 2, comprising:
Unique code 1 as shown in Figure 1;
Unique code platform 2, where unique code platform 2 is configured to link product information with unique code 1; to match the information on the unique code platform 2 with a unique code 1, respectively. Taking clothing as an example, the information of the piece of clothing can be set on the unique code platform 2, including but not limited to unit price, style, year, material, material proportion content, manufacturer information, sales store information, salesman, location, shelf, whether it is on sale, discount, washing guide function, match recommendations, new product recommendations, and an official flagship store that can connect to the online sales platform, and the information within the manufacturer information can be contacted on the unique code platform 2, including the official Wechat mini program, Wechat public account, official Weibo, official APP, authenticity inquiry, Personal center and after-sale service and other information. The above information is in match with a unique code 1, respectively.

A storage medium 3 is disposed on the unique code platform 2 to store the commodity information in the storage medium 3; the storage medium 3 is mainly used to store the commodity information.

The front-end client terminal 4 is configured to connect with the unique code platform 2 through the network; The front-end client terminal 4 obtains the commodity information stored on the storage medium 3 through the unique code 1; The function of the front-end client terminal 4 is mainly to manage and display goods based on the uniqueness of the unique code 1. Customers can know the information of the product according to the content displayed by the front-end client terminal 4. Taking clothing as an example, customers can know the product information through the front-end client, taking clothing as an example, including but not limited to unit price, style, year, material, material proportion content, manufacturer information, sales store information, salesman, storage location, shelf, whether it is on sale, discount, washing guide function, match recommendations and new product recommendations, as well as official flagship stores that can connect to online sales platforms and the information within the manufacturer information can be contacted on the front-end client terminal, including official Wechat mini programs, Wechat public accounts, official Weibo, official APP, authenticity inquiry, personal center and after-sales service and other information. In one embodiment, the front-end client terminal includes but is not limited to a sales store system, and a link that the customer enters the unique code platform 2 after scanning the unique code 1.

The back-end management module 5 is configured to assign a value to unique code 1 or to modify the commodity information of unique code 1. The back-end management module 5 includes but is not limited to the manufacturer's device for coding goods, manufacturer maintenance platform, etc.. The back-end management module 5 is mainly used for the second information entry after the recycling of the digital label of the present invention. Taking clothing as an example, that is, when the clothing is purchased by the customer, after the digital label of the present invention is recycled, a second code is assigned to the newly produced clothing by the manufacturer's coding equipment.

The digital label in the present embodiment is provided with a unique code 1 and a unique code platform 2, where the unique code platform 2 is configured to link the product information with the unique code 1, and the storage medium 3 is provided on the unique code platform 2, and the product information is stored in the storage medium 3; and the front-end client terminal 4 is configured to connect with the unique code platform 2 through the network; the front-end client terminal 4 obtains the commodity information stored on the storage medium 3 through the unique code 1; and the back-end management module 5 can be set, where the back-end management module 5 is configured to assign a value to the unique code 1 or to modify the commodity information of the unique code 1, so that in this embodiment the digital label can be convenient for reading and writing, can be used as the only entrance for the representation of the information, and at the same time a digital label can have the capability in the high-density coding, a large information capacity, a strong fault tolerance, with an error correction function, where a damage can also be identified and has high confidentiality, low cost, easy to make, durable and other characteristics. It can solve the technical problem in the existing technologies that more and more information to be represented is needed on a label, and a traditional label, whether it is a paper label or a washable label, can no longer meet the need.

In order to achieve the above technical effect, as shown in Figure 1 and Figure 2, in one embodiment a first storage element 11 is provided on the digital label, and the product information is written to the first storage element 11 through a coding device.

Taking clothing as an example, information like the unit price, style, year, material, material proportion content, manufacturer information, sales store information, salesman, storage location, shelf, whether it is on sale, discount, washing guide function, collocation recommendation and new product recommendation, as well as the official flagship store that can be connected to the online sales platform and the manufacturer's contact information including the official Wechat mini program, Wechat public account, official Weibo, official APP, authenticity inquiry, personal center and after-sales service, etc can be written into the first storage element 11 by a coding equipment. In an embodiment, the first memory element 11 includes a storage element like a RAM register, a RFID radio frequency component and etc.. This is because the information capacity that can be recorded by the first storage element 11 is much larger than that of an existing traditional label, whether it is a paper label or a washable label. Thus, a digital label can be convenient for reading and writing, can be used as the only entrance for the representation of the information, and at the same time a digital label can have the capability in the high-density coding, a large information capacity, a strong fault tolerance, with an error correction function, where a damage can also be identified and has high confidentiality, low cost, easy to make, durable and other characteristics.

In order to achieve the above technical effects, as shown in Figures 1 and 2, the unique code 1 corresponds to the commodity information stored on the storage medium 2. This can ensure that in this embodiment the technical features of the digital label acts as the only entrance for representation of information.

In order to achieve the above technical effect, as shown in Figures 1 and 2, the front-end client terminal 4 is also provided with a second storage element 41, the commodity information stored on the first storage element 11 is stored on the second storage element 41, and the front-end client 4 reads the product information from the second storage element 41 by reading the unique code 1. Taking clothing as an example, the clothing sales store system and the customer can scan the unique code 1, enter the unique code platform 2 link, read the product information of the clothing from the product information stored on the first storage element 11, and save it to the second storage element 41. The information can be seen by the clothing sales store system and the customer via a computer, a mobile phone and another smart device.

In order to achieve the above technical effect, as shown in Figures 1 and 2, the front-end client terminal 4 is connected to at least one unique code platform 2, and the unique code platform 2 is connected to at least one back-end management module 5. Taking clothing as an example, the front-end client terminal 4 such as the sales store system or the customer is configured to connect to the unique code platform 2, i.e. a digital label unique code platform established by a digital label manufacturer, via a network connection. The unique code platform 2 is configured to connect to the back-end management module 5 such as the back-end management module 5 established by a clothing manufacturer. Taking the above as an example, both the front-end client terminal 4 and the back-end management module 5 can be more than one, and in this embodiment the unique code platform 2 is a digital label unique code platform established by the coding digital label manufacturer.

In order to achieve the above technical effect, as shown in Figure 1 and Figure 2, the unique code 1 in this embodiment further comprises:
an one-dimensional barcode or a two-dimensional code; The digital label in this embodiment is set as a one-dimensional barcode or a two-dimensional code; In this embodiment, the one-dimensional barcode or the two-dimensional code of the digital label is integrally configured within the first storage element 11 of the digital label.

In order to achieve the above technical effect, as shown in Figure 1 and Figure 2, the first storage element 11 is an RFID radio frequency element, and the first storage element 11 is configured to write commodity information into the first storage element 11 through a coding device. The first storage element 11 in this embodiment is an RFID radio frequency element, and the coding device is an RFID fast coding machine which can write more than 8M information within 0.1 seconds - 0.3 seconds. In this embodiment, taking clothing as an example, information to be written generally includes the unit price, the style, the year, the material, the material proportion content, the manufacturer information, the sales store information, the salesman, the storage location, the shelf, whether it is on sale, the discount, the washing guide function, the collocation recommendation and the new product recommendation, and the official flagship store at the online sales platform of and the manufacturer contact information including the official Wechat mini program, Wechat public account, official Weibo, official APP, authenticity query, personal center and after-sales service and other information.

In order to achieve the above technical effect, as shown in Figure 1 and Figure 2, the unique code 1 in an embodiment is scanned by the scanning gun or scanning camera, to read the link of the unique code, and to connect to the unique code platform 2 via the network, and to read the commodity information stored in the storage medium in the unique code platform 2. In an embodiment, reading the commodity information stored on the storage medium in the unique code platform 2 means reading the commodity information in a hard disk or server or a cloud server in the unique code platform 2.

In an embodiment, there is provided with a method for reading information, where the first memory element 11 can be scanned by the RFID scan reader, to directly read the commodity information stored on the memory medium within the unique code platform 2. That is, a RFID scan reader is used to scan the first storage element 11 to directly read. Such a reading method is generally used when a digital label manufacturer or a sales store makes an inventory of clothing. This reading method can be performed wirelessly and is faster.

In order to achieve the above technical effect, as shown in Figure 1 and Figure 2, in an embodiment the front-end client terminal 4 can be configured to click the unique code 1 through an input box or a mouse, and to obtain the commodity information in the storage medium on the unique code platform 2 via the network. Taking clothing as an example, in an embodiment a sales store system can be configured to click the unique code 1 directly through an input box or a mouse, and to obtain the commodity information in the storage medium on the unique code platform 2 via the network.

In order to achieve the above technical effect, as shown in Figure 1 and Figure 2, in an embodiment the digital label is attached to the goods to be identified by pasting or sewing. Taking clothing as an example, on the clothing the digital label can be attached to the clothing to be identified by pasting or sewing, and the digital label in this embodiment can be applied to any goods.

Those of ordinary skill in the art can understand that the above description is specific embodiments of the present invention, and in practice various changes may be made in form and details.

## Claims

1. A digital label system, comprising:
a digital label comprising:
a unique code (1);
a first storage element (11), wherein the first storage element (11) is configured to store commodity information;
a unique code platform (2), wherein the unique code platform (2) is configured to link the commodity information with the unique code (1);
wherein the unique code platform (2) comprises a storage medium (3), and the storage medium (3) is configured to store the commodity information;
a front-end client terminal (4), wherein the front-end client terminal (4) comprises a second storage element (41) and is configured to connect to the unique code platform (2) via a network;
wherein the front-end client terminal (4) is configured to:
obtain the commodity information in the storage medium (3) in the unique code platform (2) through a network by clicking the unique code (1) through an input box or a mouse; or,
store the commodity information stored on the first storage element (11) to the second storage element (41) and read the commodity information from the second storage element (41) by reading the unique code (1);
display the commodity information;
a back-end management module (5), wherein the back-end management module (5) is configured to assign a value to the unique code (1) or modify the commodity information of the unique code (1) or to assign a second code after the digital label is recycled.

2. The digital label system according to claim 1, wherein the commodity information is written into the first storage element (11) by a coding device.

3. The digital label system according to claim 1 or 2, wherein the unique code (1) corresponds to the commodity information stored in the storage medium (3).

4. The digital label system according to any preceding claim, wherein the front-end client terminal (3) is configured to connect to at least one of unique code platforms, and the unique code platform (2) is configured to connect to at least one of back-end management modules (5).

5. The digital label system according to any preceding claim, wherein the unique code (1) further comprises:
a one-dimensional barcode or a two-dimensional code; wherein the one-dimensional barcode or the two-dimensional code is configured on the digital label; wherein the one-dimensional barcode or the two-dimensional code is configured with a first storage element (11) of the digital label as an integral.

6. The digital label system according to claim 5, wherein the first storage element (11) is an RFID radio frequency element, and the first storage element (11) is configured to write commodity information in the first storage element by a coding device.

7. The digital label system according to claim 5, wherein the unique code (1) is configured to be scanned by a scanning gun or scanning camera, to read the link of the unique code, and to connect to the unique code platform (2) via a network, and to read the commodity information stored in the storage memory medium (3) in the unique code platform (2);
or
wherein the first storage element (11) is configured to be scanned by an RFID scan reader to directly read the commodity information stored in the storage medium (3) in the unique code platform (2).

8. The digital label system according to any one of claims 1-7, wherein the digital label is attached to the goods to be identified by pasting or sewing.

## Patentansprüche

1. Digitales Etikettensystem, das umfasst:
ein digitales Etikett, das umfasst:
einen eindeutigen Code (1);
ein erstes Speicherelement (11), wobei das erste Speicherelement (11) so konfiguriert ist, dass es Wareninformationen speichert;
eine eindeutige Code-Plattform (2), wobei die eindeutige Code-Plattform (2) so konfiguriert ist, dass sie die Wareninformationen mit dem eindeutigen Code (1) verknüpft;
wobei die eindeutige Code-Plattform (2) ein Speichermedium (3) umfasst, und das Speichermedium (3) so konfiguriert ist, dass es die Wareninformationen speichert;
ein Front-End-Client-Terminal (4), wobei das Front-End-Client-Terminal (4) ein zweites Speicherelement (41) umfasst und so konfiguriert ist, dass es über ein Netzwerk mit der eindeutigen Code-Plattform (2) verbunden ist;
wobei das Front-End-Client-Terminal (4) so konfiguriert ist, dass es:
die Wareninformationen im Speichermedium (3) in der eindeutigen Code-Plattform (2) über ein Netzwerk durch Anklicken des eindeutigen Codes (1) über ein Eingabefeld oder eine Maus erhält; oder
die auf dem ersten Speicherelement (11) gespeicherten Wareninformationen auf dem zweiten Speicherelement (41) speichert und die Wareninformationen aus dem zweiten Speicherelement (41) durch Lesen des eindeutigen Codes (1) liest;
die Wareninformationen anzeigt;
ein Back-End-Verwaltungsmodul (5), wobei das Back-End-Verwaltungsmodul (5) so konfiguriert ist, dass es dem eindeutigen Code (1) einen Wert zuweist oder die Wareninformationen des eindeutigen Codes (1) ändert oder einen zweiten Code zuweist, nachdem das digitale Etikett recycelt wurde.

2. Digitales Etikettensystem nach Anspruch 1, wobei die Wareninformationen durch eine Codierungsvorrichtung in das erste Speicherelement (11) geschrieben werden.

3. Digitales Etikettensystem nach Anspruch 1 oder 2, wobei der eindeutige Code (1) den in dem Speichermedium (3) gespeicherten Wareninformationen entspricht.

4. Digitales Etikettensystem nach einem der vorstehenden Ansprüche, wobei das Front-End-Client-Terminal (3) so konfiguriert ist, dass es mit mindestens einer der eindeutigen Code-Plattformen verbunden ist, und die eindeutige Code-Plattform (2) so konfiguriert ist, dass sie mit mindestens einem der Back-End-Verwaltungsmodule (5) verbunden ist.

5. Digitales Etikettensystem nach einem der vorstehenden Ansprüche, wobei der eindeutige Code (1) ferner umfasst:
ein eindimensionaler Barcode oder ein zweidimensionaler Code; wobei der eindimensionale Barcode oder der zweidimensionale Code auf dem digitalen Etikett konfiguriert ist; wobei der eindimensionale Barcode oder der zweidimensionale Code mit einem ersten Speicherelement (11) des digitalen Etiketts als integraler Bestandteil konfiguriert ist.

6. Digitales Etikettensystem nach Anspruch 5, wobei das erste Speicherelement (11) ein RFID-Hochfrequenzelement ist, und das erste Speicherelement (11) so konfiguriert ist, dass es Wareninformationen durch eine Codierungsvorrichtung in das erste Speicherelement schreibt.

7. Digitales Etikettensystem nach Anspruch 5, wobei der eindeutige Code (1) so konfiguriert ist, dass er von einem Scanner oder einer Abtastkamera gescannt werden kann, den Link des eindeutigen Codes liest und über ein Netzwerk mit der eindeutigen Code-Plattform (2) verbunden ist und die im Speichermedium (3) der eindeutigen Code-Plattform (2) gespeicherten Wareninformationen liest,
oder
wobei das erste Speicherelement (11) so konfiguriert ist, dass es von einem RFID-Scanlesegerät gescannt werden kann, um die in dem Speichermedium (3) in der eindeutigen Code-Plattform (2) gespeicherten Wareninformationen direkt zu lesen.

8. Digitales Etikettensystem nach einem der Ansprüche 1 bis 7, wobei das digitale Etikett durch Aufkleben oder Aufnähen an den zu identifizierenden Waren angebracht wird.

## Revendications

1. Système d'étiquette numérique, comprenant :
une étiquette numérique comprenant :
un code unique (1) ;
un premier élément de stockage (11), dans lequel le premier élément de stockage (11) est configuré pour stocker des informations de marchandise ;
une plate-forme de code unique (2), dans lequel la plate-forme de code unique (2) est configurée pour associer les informations de marchandise au code unique (1)
dans lequel la plate-forme de code unique (2) comprend un support de stockage (3), et le support de stockage (3) est configuré pour stocker les informations de marchandise ;
un terminal client frontal (4), dans lequel le terminal client frontal (4) comprend un deuxième élément de stockage (41) et est configuré pour se connecter à la plate-forme de code unique (2) via un réseau ;
dans lequel le terminal client frontal (4) est configuré pour :
obtenir les informations de marchandise dans le support de stockage (3) dans la plate-forme de code unique (2) à travers un réseau en cliquant sur le code unique (1) à travers un boîtier de saisie ou une souris ; ou,
stocker les informations de marchandise stockées sur le premier élément de stockage (11) dans le deuxième élément de stockage (41) et lire les informations de marchandise à partir du deuxième élément de stockage (41) en lisant le code unique (1) ;
afficher les informations de marchandise ;
un module de gestion dorsal (5), dans lequel le module de gestion dorsal (5) est configuré pour attribuer une valeur au code unique (1) ou modifier les informations de marchandise du code unique (1) ou pour attribuer un deuxième code après recyclage de l'étiquette numérique.

2. Système d'étiquette numérique selon la revendication 1, dans lequel les informations de marchandise sont écrites dans le premier élément de stockage (11) par un dispositif de codage.

3. Système d'étiquette numérique selon la revendication 1 ou 2, dans lequel le code unique (1) correspond aux informations de marchandise stockées dans le support de stockage (3).

4. Système d'étiquette numérique selon l'une des revendications précédentes, dans lequel le terminal client frontal (3) est configuré pour se connecter à au moins l'une parmi les plates-formes de code unique, et la plate-forme de code unique (2) est configurée pour se connecter à au moins l'un parmi les modules de gestion dorsaux (5).

5. Système d'étiquette numérique selon l'une des revendications précédentes, dans lequel le code unique (1) comprend en outre :
un code à barres unidimensionnel ou un code bidimensionnel ; dans lequel le code à barres unidimensionnel ou le code bidimensionnel est configuré sur l'étiquette numérique ; dans lequel le code à barres unidimensionnel ou le code bidimensionnel est configuré intégralement avec un premier élément de stockage (11) de l'étiquette numérique.

6. Système d'étiquette numérique selon la revendication 5, dans lequel le premier élément de stockage (11) est un élément radio **RFID,** et le premier élément de stockage (11) est configuré pour écrire des informations de marchandise dans le premier élément de stockage par un dispositif de codage.

7. Système d'étiquette numérique selon la revendication 5, dans lequel le code unique (1) est configuré pour être scanné par un pistolet scanner ou une caméra scanner, pour lire le lien du code unique, et pour se connecter à la plate-forme de code unique (2) via un réseau, et pour lire les informations de marchandise stockées dans le support de mémoire de stockage (3) dans la plate-forme de code unique (2) ;
ou
dans lequel le premier élément de stockage (11) est configuré pour être scanné par un lecteur scanner **RFID** pour lire directement les informations de marchandise stockées dans le support de stockage (3) dans la plate-forme de code unique (2).

8. Système d'étiquette numérique selon l'une quelconque des revendications 1 à 7, dans lequel l'étiquette numérique est fixée aux marchandises à identifier par collage ou couture.
